# EUROPÄISCHE PATENTSCHRIFT

(11) **EP 1 285 814 B1**
(45) Veröffentlichungstag und Bekanntmachung des Hinweises auf die Patenterteilung: **10.08.2005**
(21) Anmeldenummer: 01120053.2
(22) Anmeldetag: 21.08.2001
(51) Int. Cl.: B60R 1/00

(54) **Überwachungseinrichtung für Fahrzeuge**
Monitoring device for vehicles
Dispositif de surveillance pour véhicules

(43) Veröffentlichungstag der Anmeldung: 26.02.2003
(73) Patentinhaber: Ford Global Technologies, LLC, Dearborn, MI 48126 (US)
(72) Erfinder: Spahl, Robert, 50859 Köln (DE)
(74) Vertreter: Drömer, Hans-Carsten, Dipl.-Ing.

(56) Entgegenhaltungen:
- PATENT ABSTRACTS OF JAPAN vol. 1999, no. 09, 30. Juli 1999 (1999-07-30) & JP 11 115546 A (HARNESS SYST TECH RES LTD;SUMITOMO WIRING SYST LTD; SUMITOMO ELECTRIC), 27. April 1999 (1999-04-27)
- PATENT ABSTRACTS OF JAPAN vol. 1999, no. 02, 26. Februar 1999 (1999-02-26) & JP 10 299032 A (KENSETSUSHO KANTO CHIHO KENSETSU KYOKUCHO;SHIN CATERPILLAR MITSUBISHI), 10. November 1998 (1998-11-10)
- PATENT ABSTRACTS OF JAPAN vol. 2000, no. 06, 22. September 2000 (2000-09-22) & JP 2000 071877 A (NISSAN MOTOR CO LTD), 7. März 2000 (2000-03-07)

## Beschreibung

Die Erfindung bezieht sich auf eine Einrichtung zur Überwachung einer nicht unmittelbar einsehbaren Umgebung insb. eines Fahrzeuges und/ oder zur vorausschauenden Überwachung der Fahrzeugbahn, mit wenigstens einer an der Außenseite und/ oder Innenseite der Fahrzeug- Karosserie angeordneten Bildaufnahmeeinheit, mit einer Signalverarbeitungsvorrichtung und mit wenigstens einer im Blickfeld des Fahrzeugführers und/ oder der Fahrzeuginsassen angeordneten Anzeigevorrichtung.

Aus dem Stand der Technik sind verschiedene Einrichtungen zur Überwachung einer nicht unmittelbar einsehbaren Umgebung insb. eines Fahrzeuges oder zur vorausschauenden Überwachung der Fahrzeugbahn bekannt. So ist z.B. aus der gattungsgemässe DE 199 23 964 A1 ein Überwachungsgerät für die Umgebung eines Fahrzeuges bekannt mit mehreren Bildaufnahmeeinheiten, in diesem Falle CCD- Kameras, die zur Aufnahme von Bildern in einer Vielzahl von unterschiedlichen Richtungen ausgebildet sind. Es werden dabei die von den Bildaufnahmeeinheiten aufgenommenen Signale in Kombination mit einem von einer Bildgestaltungseinheit ausgebildeten Fahrzeugbild über eine hier allgemein mit Steuer- und Regeleinheit bezeichnete Signalverarbeitungsvorrichtung unter Berücksichtigung weiterer Parameter und Signaleingaben zu einem synchronisierten Bild weitervearbeitet und auf einer Anzeigevorrichtung zur Anzeige gebracht. Es werden dabei mehrere Bilder in einer Anzeigevorrichtung gleichzeitig, sich überlappend angezeigt, wobei hier unterschiedliche Möglichkeiten für die Art der Überlappung bestehen. Nachteilig ist bei dieser Anordnung, daß es für deren Realisierung einer aufwendigen Steuer- und Regeleinheit bedarf, weiterhin nachteilig ist die Art der teilweise recht verwirrenden und umständlichen Anzeige der erkannten Hindernisse, Personen, Fahrzeuge etc.

Weiterhin ist aus der WO 99/10195 ein Verfahren zur Informationsanzeige in einem Fahrzeug bekannt, das eine Kamera und eine damit verbundene Steuer-/Auswerteeinheit zur Bilderkennung umfaßt, wobei auf einer Anzeigeeinheit ein Ausschnitt des Bildes der Kamera angezeigt wird, der nach Auswertung durch die Steuer-/ Auswerteeinheit ein Verkehrszeichen enthält. Diese Anordnung bezieht sich also insb. auf in einem Fahrzeug angeordnete Funktionen zur Unterstützung des Fahrers bei der Verkehrszeichenerkennung, wobei dieses System mit zusätzlichen Funktionen für eine Geschwindigkeitsüberwachung und ggfs. -regulierung und/ oder z.B. für eine Fahrspurerkennung ausgestattet sein kann.

Bei den bekannten Ausführungsformen von Überwachungseinrichtungen für Fahrzeuge sowie auch bei Fahrzeugen ohne oder mit andersartigem Überwachungssystem ergibt sich das Problem, daß der Fahrer sowie auch die anderen Fahrzeuginsassen durch die Karosserie des Fahrzeuges oder Teile davon in ihrer Sicht beschränkt werden, wobei insb. die A- Säule die Sicht des Fahrers beeinträchtigt. Um dieses zu vermeiden, würde man einerseits den Aufbau der Karosserie so wenig platzaufwendig wie möglich gestalten. Andererseits ist der Aufbau der Karosserie wesentlich für die Steifigkeit des Fahrzeuges, so ist es für eine Verbesserung des Fahrzeuges hinsichtlich seines Verhaltens bzgl. Geräusche, Vibrationen, Festigkeit und hinsichtlich seiner dynamischen Eigenschaften erforderlich, den Aufbau so platzaufwendig wie möglich zu gestalten. Um diesen Widerspruch zu umgehen bzw. die aufgetretenen Probleme zu lösen, hat man versucht, Fahrzeuge mit einer halb- lichtdurchlässigen A- Säule auszustatten. Dies führt allerdings zu einer aufwendigen und kostspieligen Karosseriestruktur, über welche auch nur ein Kompromiß zwischen Sichtbarkeit nach außen und z.B. der Steifigkeit der Karosserie des Fahrzeuges erreicht wird.

Der Erfindung liegt die Aufgabe zugrunde, die bekannten Überwachungseinrichtungen insb. für Fahrzeuge unter Beibehaltung der bisherigen Vorteile in der Weise zu verbessern bzw. weiterzuentwickeln, daß die zuvor beschriebenen Nachteile vermieden werden. Die gewünschte Anordnung soll also eine möglichst optimale Sicht nach außen bereitstellen und trotzdem auch gute Karosserieeigenschaften für das Fahrzeug ermöglichen. Die gewünschte Anordnung soll außerdem einfach und wirtschaftlich herstellbar und gut in den Funktonseigenschaften und der Handhabung sein.

Die Aufgabe wird erfindungsgemäß dadurch gelöst, daß die wenigstens eine Anzeigevorrichtung der Einrichtung zur Überwachung als elektronisches, formbar oder flexibel ausgebildetes, an der Innenseite der Karosserie angeordnetes FlachDisplay ausgebildet ist. Auf diese Weise wird erstmalig mit einfachen Mitteln die Möglichkeit geschaffen, auch die nicht unmittelbar vom Fahrzeuginneren einsehbare Umgebung eines Fahrzeuges sichtbar zu machen, ohne dabei nachteilige Auswirkungen hinsichtlich des Karosserieaufbaus in Kauf nehmen zu müssen. Es ist dabei die innere Seite des Karosserieaufbaus verkleidet ausgebildet; auf der Außenseite des Karosserieaufbaus und/oder von innerhalb der Karosserie in der Nähe des verkleideten Karosserieaufbaus sendet eine Bildaufnahmeeinheit wie z.B. eine Kamera ein Bild von der Umgebung an einen Computer, der das korrekte Bild für eine Anzeige auf der Innenseite berechnet. Dies versetzt z.B. den Fahrer in die Lage, sich bzgl. nicht sichtbarer Hindernisse od. dgl. bewußt zu sein, die anderenfalls durch den Karosserieaufbau verdeckt würden. Es wird dadurch eine Unfallgefahr durch von dem Fahrer nicht erkannte Hindernisse od. dgl. wesentlich vermindert und die Fahrsicherheit erhöht. Zusätzlich kann dabei der Karosserieaufbau zum Erreichen einer höheren Steifigkeit sogar noch vergrößert oder verstärkt werden.

Bei der bevorzugten Ausführungsform der vorliegenden Erfindung ist die wenigstens eine Anzeigevorrichtung der Einrichtung zur Überwachung als formbar oder flexibel ausgebildetes, an der Innenseite der Karosserie angeordnetes elektronisches Papier (- Display) ausgebildet ist. Es wird hier also in geeigneter Weise eine neuartige Art der Displayanzeige für diesen Anwendungsbereich nutzbar gemacht. Dabei ist zweckmäßig die wenigstens eine Anzeigevorrichtung der Einrichtung zur Überwachung als an der Innenseite der Karosserie angeordnetes E- ink- Display ausgebildet.

Bei einer anderen Ausführungsform der vorliegenden Erfindung ist die wenigstens eine Anzeigevorrichtung der Einrichtung zur Überwachung als an der Innenseite der Karosserie angeordnetes Gyricon- Display ausgebildet.

Bei einer von diesen Ausführungen abweichenden Ausführungsform ist die wenigstens eine Anzeigevorrichtung der Einrichtung zur Überwachung als vom E-ink-Display und Gyricon-Display unterschiedliches, nahezu papierdünnes, elektronisches, formbar oder flexibel ausgebildetes, an der Innenseite der Karosserie angeordnetes Display ausgebildet.

Es empfiehlt sich nach einem bevorzugten Ausgestaltungsmerkmal der vorliegenden Erfindung, daß die wenigstens eine Anzeigevorrichtung an der Innenseite wenigstens einer A- Säule mit einer an deren jeweiligen Außenseite und/ oder Innenseite, z.B. im Innenraum in der Nähe der A- Säule, angeordneten Bildaufnahmeeinheit zusammenwirkend angeordnet ist. Auf diese Weise läßt sich die gerade von der A-Säule oftmals verdeckte Umgebung des Fahrzeuges in geeigneter Weise für den Fahrer und/ oder die anderen Fahrzeuginsassen sichtbar machen.

Alternativ oder ergänzend ist nach einem weiteren Merkmal der vorliegenden Erfindung die wenigstens eine Anzeigevorrichtung an der Innenseite wenigstens einer B- Säule mit einer an deren jeweiligen Außenseite und/ oder Innenseite, z.B. im Innenraum in der Nähe der B- Säule, angeordneten Bildaufnameeinheit zusammenwirkend angeordnet. Entsprechend ist alternativ oder ergänzend nach einem weiteren Merkmal der vorliegenden Erfindung die wenigstens eine Anzeigevorrichtung an der Innenseite wenigstens einer C- Säule mit einer an deren jeweiligen Außenseite und/ oder Innenseite, z.B. im Innenraum in der Nähe der C-Säule, angeordneten Bildaufnahmeeinheit zusammenwirkend angeordnet.

Zweckmäßig ist außerdem nach einem weiteren Merkmal der vorliegenden Erfindung die wenigstens eine Anzeigevorrichtung an der Innenseite der Karosserie im Frontbereich mit wenigstens einer an der Außenseite und/ oder Innenseite, z.B. im Innenraum über dem Augenbereich des Fahrers, im Frontbereich angeordneten Bildaufnahmeeinheit zusammenwirkend angeordnet. Auf diese Weise läßt sich auch die in diesem Bereich oftmals verdeckte Fahrzeugumgebung sichtbar machen. Alternativ oder ergänzend kann dabei nach einem weiteren Merkmal der vorliegenden Erfindung die wenigstens eine Anzeigevorrichtung an der Innenseite der Karosserie im Heckbereich mit wenigstens einer an der Außenseite und/ oder Innenseite, z.B. im Innenraum zur Verbesserung des Sichtwinkels z.B. der Kamera gegenüber dem Fahrer, im Heckbereich angeordneten Bildaufnahmeeinheit zusammenwirkend angeordnet sein. Entsprechend ist alternativ oder ergänzend nach einem weiteren Merkmal der vorliegenden Erfindung die wenigstens eine Anzeigevorrichtung an der Innenseite der Karosserie im Dachbereich mit wenigstens einer an der Außenseite und/oder Innenseite, z.B. im Innenraum mit Blick nach oben, im Dachbereich angeordneten Bildaufnahmeeinheit zusammenwirkend angeordnet.

Nach einem letzten Merkmal der vorliegenden Erfindung weist die Einrichtung zur Überwachung einen zusätzlichen Sensor zur Bestimmung der Position des Kopfes und/ oder der Position der Augen des Fahrers auf, wobei diese Information zur Weitergabe an die Signalverarbeitungseinrichtung vorgesehen ist. Dadurch läßt sich das Überwachungsergebnis zusätzlich verbessern.

Die Erfindung ist in den Figuren der Zeichnung in einem Ausführungsbeispiel dargestellt. Es zeigen:
- Fig. 1: eine schematische Draufsicht auf ein Fahrzeug mit angedeuteten nichtsichtbaren Bereichen, bei dem die erfindungsgemäße Überwachungseinrichtung einsetzbar ist,
- Fig. 2: eine schematische Seitenansicht des Fahrzeuges gemäß der Fig. 1 wieder mit angedeuteten nicht- sichtbaren Bereichen,
- Fig.3: eine schematische Schnittansicht einer A- Säule mit der erfindungsgemäßen Überwachungseinrichtung,
- Fig. 3a: eine schematische Schnittansicht einer A- Säule einer alternativen Ausführungsform mit der erfindungsgemäßen Überwachungseinrichtung.
- Fig. 4: eine stark vereinfachte Prinzipskizze der erfindungsgemäßen Überwachungseinrichtung.

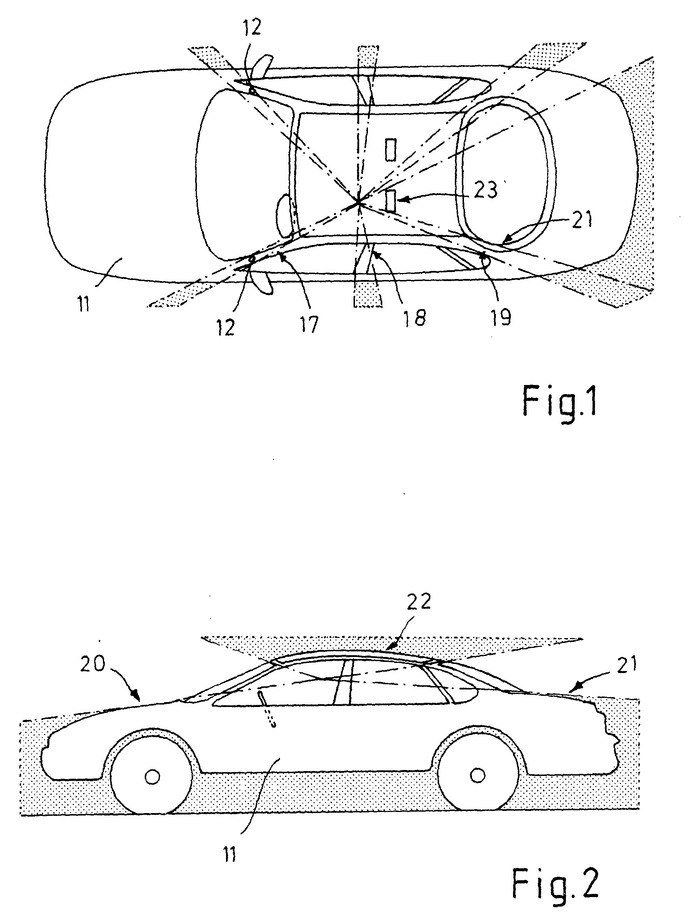

Die erfindungsgemäße Einrichtung zur Überwachung einer nicht unmittelbar einsehbaren Umgebung insb. eines Fahrzeuges und/ oder zur vorausschauenden Überwachung der Fahrzeugbahn ist generell mit 10 und das Fahrzeug ist mit 11 bezeichnet. Die erfindungsgemäße Einrichtung 10 umfaßt, siehe Fig. 4 i.V.m. Fig. 1 der Zeichnung, wenigstens eine an der Außenseite und/ oder Innenseite der Fahrzeugkarosserie angeordnete Bildaufnahmeeinheit 12, es ist dazu in der Fig. 1 beispielhaft jeweils eine Bildaufnahmeeinheit 12 an der Außenseite der jeweils mit 17 bezeichneten linken und rechten A- Säule des Fahrzeuges 11 schematisch dargestellt. Die beiden Bildaufnahmeeinheiten 12 können unterschiedliche Ausgestaltung aufweisen, sie können z.B. als CCD- Kameras ausgebildet sein oder sie können zur Vergrößerung ihres Erfassungsbereiches z.B. mit Fischaugen- Linsen ausgestattet sein. Über diese Bildaufnahmeeinheiten 12 werden alle Realzeit-Umgebungsbilder erfaßt.

Die beiden Bildaufnahmeeinheiten 12 sind, siehe Fig. 4 der Zeichnung, mit einer Signalverarbeitungsvorrichtung 13, wie z.B. einem Computer verbunden. Diese Signalverarbeitungsvorrichtung 13, wie z.B. Computer, wird die Kamera- Signale in ein von einer mit 14 bezeichneten Anzeigevorrichtung lesbares Format übertragen. Die Signalverarbeitungsvorrichtung 13 wird ggfs. außerdem eine z.B. von der Fischaugenlinse der Bildaufnahmeeinheiten 12 verursachte Verzerrung ausgleichen. Die Signalverarbeitungsvorrichtung 13 wird dabei ein Bild errechnen, das eine Übereinstimmung des auf der Anzeigevorrichtung 14 gezeigten mit dem tatsächlichen Umgebungsbild sicherstellt. Um dies zu ermöglichen, kann der Signalverarbeitungsvorrichtung 13 bei einer weiteren Ausprägung der Erfindung zusätzlich das Signal eines Sensors 28, der die Positonen des Kopfes und/ oder der Augen des Fahrers ermittelt, bereitgestellt werden. Die Ausgangssignale der Signalverarbeitungsvorrichtung 13 werden, siehe wieder die Fig. 4, der wenigstens einen Anzeigevorrichtung 14 zugeführt, die im Blickfeld des Fahrzeugführers und/oder der anderen Fahrzeuginsassen angeordnet ist.

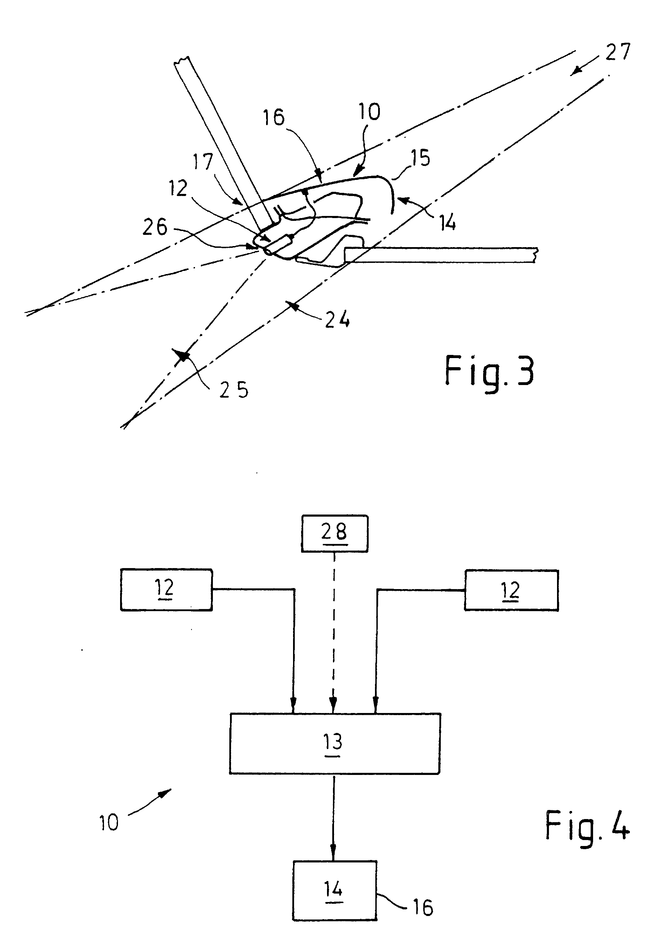

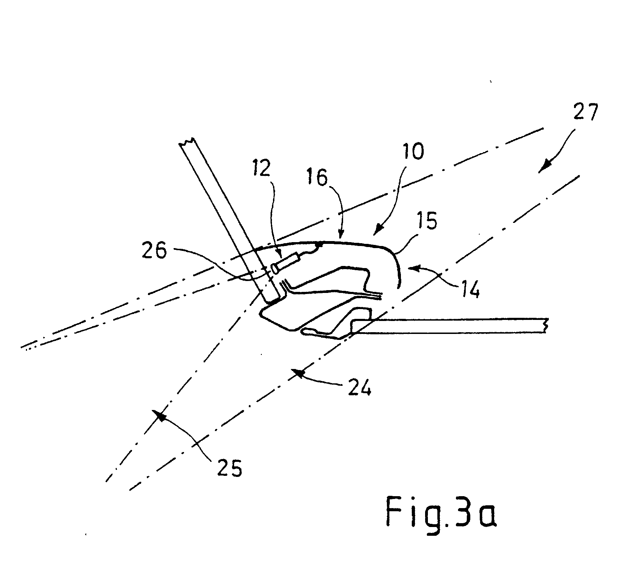

Die wenigstens eine Anzeigevorrichtung 14 der Einrichtung 10 zur Überwachung ist als elektronisches, formbar oder flexibel ausgebildetes, an der Innenseite der Karosserie angeordnetes Flach- Display 15 ausgebildet, siehe auch die Fig. 3 der Zeichnung. Es ist hier die Bildaufnahmeeinheit 12 an der Außenseite der A- Säule 17 eines Fahrzeuges 11 angebracht, die Linse der Kamera ist mit 26 bezeichnet. In Fig. 3a ist alternativ die Bildaufnahmeeinheit 12 im Inneren des Fahrzeuges angebracht. In Fig. 3 ist an der Innenseite der A- Säule 17 die als Flach- Display 15 ausgebildete Anzeigevorrichtung 14 angeordnet. In der Fig. 3 und 3a ist außerdem der Sichtbereich des Fahrers mit 27, der von der A- Säule 17 verdeckte Bereich mit 24 und der Kameraerfassungsbereich mit 25 bezeichnet, in der Fig. 1 ist der nicht sichtbare Kopfbereich des Fahrers mit 23 bezeichnet. Die Anzeigevorrichtung 14 kann dabei z.B. als elektronisches Papier 16 (- Display) ausgebildet sein. In diesem Falle ergeben sich für deren Ausgestaltung verschiedene Möglichkeiten:

Die Anzeigevorrichtung 14 aus elektronischem Papier kann z.B. als E- ink- Display ausgebildet sein. Bei diesem E- ink- Display wird ein entsprechendes Anzeigematerial in einen Film eingearbeitet, der zum Einbau in ein elektronisches Display vorgesehen ist. Dabei bestehen die Komponenten dieses Anzeigematerials aus Millionen von Kapseln, die mit einer Flüssigkeit gefüllt sind, in der wiederum weiße und schwarze Farbpigmente (pos. und neg.) schwimmen. In Abhängigkeit vom elektrischen Feld werden diese Pigmente entweder abgestoßen oder angezogen, wodurch die Kapseln schwarz oder weiß erscheinen. Der die Kapseln enthaltende Film ist dabei mit einer elektrisch leitenden Schicht verbunden, wobei diese Anordnung auf beliebige Oberflächen wie Glas, Kunststoff, Stoff oder auch Papier angebracht werden kann.

Die Anzeigevorrichtung 14 aus elektronischem Papier kann bei einer anderen Ausführungsform als Gyricon- Display ausgebildet sein. In diesem Falle besteht das elektronische Papier aus einem dünnen, mit Gummi beschichteten Film mit winzigen, eingelagerten Kapseln, die mit schwarz- weißen Teilchen gefüllt sind. Die Hälften der Kapseln sind unterschiedlich geladen, so daß sie sich in einem elektrischen Feld wie Kompassnadeln ausrichten und so z.B. Buchstaben entstehen lassen. Es läßt sich also in diesem Fall durch eine gezielte Zufuhr von elektrischer Energie ein Schriftbild erzeugen.

Bei einer von diesen beiden Ausführungsformen abweichenden Ausbildung kann die Anzeigevorrichtung 14 als vom E- ink- Display und Gyricon- Display unterschiedliches, nahezu papierdünnes, elektronisches, formbar oder flexibel ausgebildetes, an der Innenseite der Karosserie angeordnetes Display ausgebildet sein.

Bei dem in den Figuren der Zeichnung dargestellten Ausführungsbeispiel ist die wenigstens eine Anzeigevorrichtung 14 an der Innenseite der beiden A- Säulen 17 mit einer an deren jeweiligen Außenseite und/ oder Innenseite angeordneten Bildaufnahmeeinheit 12 zusammenwirkend angeordnet. Dabei können die Bildaufnahmeeinheiten 12 im Falle ihrer Anordnung an der Innenseite z.B. neben der A- Säule 17 hinter der Windschutzscheibe angeordnet sein. Alternativ oder ergänzend dazu kann die wenigstens eine Anzeigevorrichtung 14 an der Innenseite wenigstens einer B- Säule 18 und/ oder C- Säule 19 mit einer an deren jeweiligen Außenseite und/ oder Innenseite angeordneten Bildaufnahmeeinheit 12 zusammenwirkend angeordnet sein. Die davon erfaßten Umgebungsbereiche sind insb. aus der in Fig. 1 gezeigten Darstellung ersichtlich.

Weiterhin kann die wenigstens eine Anzeigevorrichtung 14 an der Innenseite der Karosserie im Frontbereich 20 mit wenigstens einer an der Außenseite und/ oder Innenseite im Frontbereich 20 angeordneten Bildaufnahmeeinheit 12 zusammenwirkend angeordnet sein. Alternativ oder ergänzend dazu kann die wenigstens eine Anzeigevorrichtung 14 an der Innenseite der Karosserie im Heckbereich 21 und/ oder im Dachbereich 22 mit wenigstens einer an der Außenseite und/ oder Innenseite im Heckbereich 21 und/ oder im Dachbereich 22 angeordneten Bildaufnahmeeinheit 12 zusammenwirkend angeordnet sein. Die davon erfaßten Umgebungsbereiche sind insb. aus der in Fig. 2 gezeigten Darstellung ersichtlich.

Die erfindungsgemäße Einrichtung 10 kann außerdem, siehe Fig. 1 i.V.m. Fig. 4, einen zusätzlichen Sensor 28 zur Bestimmung der Position des Kopfes und/ oder der Position der Augen des Fahrers aufweisen, wobei diese Information zur Weitergabe an die Signalverarbeitungseinrichtung 13 vorgesehen ist.

Die als elektronisches Papier, wie z.B. E- ink- Display, Gyricon- Display oder andersartiges elektronisches Flach- Display 15 ausgebildete Anzeigevorrichtung 14 ist also an der Innenseite der Karosserie des Fahrzeuges 11 angebracht. Wenn dieser Anzeigevorrichtung 14 ein Signal von der Signalverarbeitungsvorrichtung 13 zugeführt wird, wird das Display ein der realen Umgebung entsprechendes Bild zeigen, das der Fahrer auch bei Nicht- Vorhandensein der Karosserie des Fahrzeuges 11 sehen würde. Es kann dabei das gezeigte Bild in Abhängigkeit der Qualität des Displays niedrigauflösend oder auch schwarz/ weiß sein, aber auch ein Display mit niedrigerer Qualität wird es dem Fahrer ermöglichen, ein Hindernis früher zu erkennen.

Mit der erfindungsgemäßen Anordnung wird die Möglichkeit geschaffen, auch die nicht unmittelbar vom Fahrzeuginneren einsehbare Umgebung eines Fahrzeuges 11 sichtbar zu machen, ohne dabei nachteilige Auswirkungen hinsichtlich des Karosserieaufbaus in Kauf nehmen zu müssen. Dabei ist die innere Seite des Karosserieaufbaus verkleidet ausgebildet; auf der Außenseite und/ oder Innenseite des Karosserieaufbaus sendet eine Bildaufnahmeeinheit 12 ein Bild von der Umgebung an eine Signalverarbeitungsvorrichtung 13, die das korrekte Bild für eine Anzeigevorrichtung 14 auf der Innenseite berechnet. Dies versetzt den Fahrer in die Lage, sich bzgl. nicht sichtbarer Hindernisse od. dgl. bewußt zu sein, die anderenfalls durch den Karosserieaufbau verdeckt würden. Es wird dadurch eine Unfallgefahr durch von dem Fahrer nicht erkannte Hindernisse od. dgl. wesentlich vermindert und die Fahrsicherheit erhöht. Dabei besteht die Möglichkeit, den Karosserieaufbau ggfs. zum Erreichen einer höheren Steifigkeit auch zu vergrößern oder zu verstärken.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So ist insb. eine andere Ausgestaltung und Anbringung der Anzeigevorrichtung für die Überwachungseinrichtung als die dargestellten Möglichkeiten denkbar, weiterhin denkbar sind Variationen im Aufbau der Überwachungseinrichtung selbst sowie der Positionen der Bildaufnahmeeinheiten. Im übrigen ist es auch möglich, die erfindungsgemäße Überwachungseinrichtung bei anderen Verkehrsmitteln als dem dargestellten Fahrzeugtypen vorzusehen.

### BEZUGSZEICHENLISTE

- 10: Einrichtung zur Überwachung
- 11: Fahrzeug
- 12: Bildaufnahmeeinheit
- 13: Signalverarbeitungsvorrichtung
- 14: Anzeigevorrichtung
- 15: Flach- Display
- 16: elektronisches Papier oder anderes formbares Display
- 17: A- Säule
- 18: B- Säule
- 19: C- Säule
- 20: Frontbereich
- 21: Heckbereich
- 22: Dachbereich
- 23: nicht sichtbarer Kopfbereich
- 24: verdeckter Bereich
- 25: Kameraerfassungsbereich
- 26: Linse (von 12)
- 27: Sichtbereich des Fahrers
- 28: Sensor zur Bestimmung der Augen und/ oder Kopfposition

## Patentansprüche

1. Einrichtung (10) zur Überwachung einer nicht unmittelbar einsehbaren Umgebung insb. eines Fahrzeuges (11) und/ oder zur vorausschauenden Überwachung der Fahrzeugbahn, mit wenigstens einer an der Außenseite und/ oder Innenseite der Fahrzeug- Karosserie angeordneten Bildaufnahmeeinheit (12), mit einer Signalverarbeitungsvorrichtung (13) und mit wenigstens einer im Blickfeld des Fahrzeugführers und/ oder der Fahrzeuginsassen angeordneten Anzeigevorrichtung (14),
**dadurch gekennzeichnet, daß**
die wenigstens eine Anzeigevorrichtung (14) der Einrichtung (10) zur Überwachung als elektronisches, formbar oder flexibel ausgebildetes, an der Innenseite der Karosserie angeordnetes Flach- Display (15) ausgebildet ist.

2. Einrichtung nach Anspruch 1,
**dadurch gekennzeichnet, daß**
die wenigstens eine Anzeigevorrichtung (14) der Einrichtung (10) zur Überwachung als formbar oder flexibel ausgebildetes, an der Innenseite der Karosserie angeordnetes elektronisches Papier (- Display) (16) ausgebildet ist.

3. Einrichtung nach Anspruch 1 oder 2,
**dadurch gekennzeichnet, daß**
die wenigstens eine Anzeigevorrichtung (14) der Einrichtung (10) zur Überwachung als an der Innenseite der Karosserie angeordnetes E- ink-Display ausgebildet ist.

4. Einrichtung nach Anspruch 1 oder 2,
**dadurch gekennzeichnet, daß**
die wenigstens eine Anzeigevorrichtung (14) der Einrichtung (10) zur Überwachung als an der Innenseite der Karosserie angeordnetes Gyricon-Display ausgebildet ist.

5. Einrichtung nach Anspruch 1 oder 2,
**dadurch gekennzeichnet, daß**
die wenigstens eine Anzeigevorrichtung (14) der Einrichtung (10) zur Überwachung als vom E- ink- Display und Gyricon- Display unterschiedliches, nahezu papierdünnes, elektronisches, formbar oder flexibel ausgebildetes, an der Innenseite der Karosserie angeordnetes Display ausgebildet ist.

6. Einrichtung nach einem der Ansprüche 1 bis 5,
**dadurch gekennzeichnet, daß**
die wenigstens eine Anzeigevorrichtung (14) an der Innenseite wenigstens einer A- Säule (17) mit einer an deren jeweiligen Außenseite und/ oder Innenseite angeordneten Bildaufnahmeeinheit (12) zusammenwirkend angeordnet ist.

7. Einrichtung nach einem der Ansprüche 1 bis 6,
**dadurch gekennzeichnet, daß**
die wenigstens eine Anzeigevorrichtung (14) an der Innenseite wenigstens einer B- Säule (18) mit einer an deren jeweiligen Außenseite und/ oder Innenseite angeordneten Bildaufnahmeeinheit (12) zusammenwirkend angeordnet ist.

8. Einrichtung nach einem der Ansprüche 1 bis 7,
**dadurch gekennzeichnet, daß**
die wenigstens eine Anzeigevorrichtung (14) an der Innenseite wenigstens einer C- Säule (19) mit einer an deren jeweiligen Außenseite und/ oder Innenseite angeordneten Bildaufnahmeeinheit (12) zusammenwirkend angeordnet ist.

9. Einrichtung nach einem der Ansprüche 1 bis 8,
**dadurch gekennzeichnet, daß**
die wenigstens eine Anzeigevorrichtung (14) an der Innenseite der Karosserie im Frontbereich (20) mit wenigstens einer an der Außenseite und/ oder Innenseite im Frontbereich (20) angeordneten Bildaufnahmeinheit (12) zusammenwirkend angeordnet ist.

10. Einrichtung nach einem der Ansprüche 1 bis 9,
**dadurch gekennzeichnet, daß**
die wenigstens eine Anzeigevorrichtung (14) an der Innenseite der Karosserie im Heckbereich (21) mit wenigstens einer an der Außenseite und/ oder Innenseite im Heckbereich (21) angeordneten Bildaufnahmeeinheit (12) zusammenwirkend angeordnet ist.

11. Einrichtung nach einem der Ansprüche 1 bis 10,
**dadurch gekennzeichnet, daß**
die wenigstens eine Anzeigevorrichtung (14) an der Innenseite der Karosserie im Dachbereich (22) mit wenigstens einer an der Außenseite und/ oder Innenseite im Dachbereich (22) angeordneten Bildaufnahmeeinheit (12) zusammenwirkend angeordnet ist.

12. Einrichtung nach einem der Ansprüche 1 bis 10,
**dadurch gekennzeichnet, daß**
die Einrichtung zur Überwachung einen zusätzlichen Sensor (28) zur Bestimmung der Position des Kopfes und/ oder der Position der Augen des Fahrers aufweist, wobei diese Information zur Weitergabe an die Signalverarbeitungseinrichtung (13) vorgesehen ist.

## Claims

1. Device (10) for monitoring a vicinity, in particular of a vehicle (11), which cannot be seen directly, and/or for monitoring the vehicle lane when looking ahead, having at least one image recording unit (12) arranged on the outside and/or inside of the vehicle body, having a signal processing apparatus (13), and having at least one display apparatus (14) arranged in the field of view of the vehicle driver and/or of the vehicle occupants, **characterized in that** the at least one display apparatus (14) of the device (10) is designed for the purpose of monitoring as an electronic flat display (15) which is of shapeable or flexible design and is arranged on the inside of the body.

2. Device according to Claim 1, **characterized in that** the at least one display apparatus (14) of the device (10) is designed for the purpose of monitoring as an electronic paper (display) (16) which is of shapeable or flexible design and is arranged on the inside of the body.

3. Device according to Claim 1 or 2, **characterized in that** the at least one display apparatus (14) of the device (10) is designed for the purpose of monitoring as an E ink display arranged on the inside of the body.

4. Device according to Claim 1 or 2, **characterized in that** the at least one display apparatus (14) of the device (10) is designed for the purpose of monitoring as a Gyricon display arranged on the inside of the body.

5. Device according to Claim 1 or 2, **characterized in that** the at least one display apparatus (14) of the device (10) is designed for the purpose of monitoring as a virtually paper-thin, electronic display which differs from the E ink display and Gyricon display, is of shapeable or flexible design and is arranged on the inside of the body.

6. Device according to one of Claims 1 to 5, **characterized in that** the at least one display apparatus (14) is arranged on the inside of at least one A pillar (17) in a fashion cooperating with an image recording unit (12) arranged on the respective outside and/or inside of the said A pillar.

7. Device according to one of Claims 1 to 6, **characterized in that** the at least one display apparatus (14) is arranged on the inside of at least one B pillar (18) in a fashion cooperating with an image recording unit (12) arranged on the respective outside and/or inside of the said B pillar.

8. Device according to one of Claims 1 to 7, **characterized in that** the at least one display apparatus (14) is arranged on the inside of at least one C pillar (19) in a fashion cooperating with an image recording unit (12) arranged on the respective outside and/or inside of the said C pillar.

9. Device according to one of Claims 1 to 8, **characterized in that** the at least one display apparatus (14) is arranged on the inside of the body in the front area (20) in a fashion cooperating with at least one image recording unit (12) arranged on the outside and/or inside in the front area (20).

10. Device according to one of Claims 1 to 9, **characterized in that** the at least one display apparatus (14) is arranged on the inside of the body in the rear area (21) in a fashion cooperating with at least one image recording unit (12) arranged on the outside and/or inside in the rear area (21).

11. Device according to one of Claims 1 to 10, **characterized in that** the at least one display apparatus (14) is arranged on the inside of the body in the roof area (22) in a fashion cooperating with at least one image recording unit (12) arranged on the outside and/or inside in the roof area (22).

12. Device according to one of Claims 1 to 10, **characterized in that** for the purpose of monitoring the device has an additional sensor (28) for determining the position of the head and/or the position of the eyes of the driver, this information being provided for passing on to the signal processing device (13).

## Revendications

1. Dispositif (10) de surveillance d'un environnement non visible directement d'un véhicule (11) et/ou de surveillance anticipée de la chaussée, comprenant au moins une unité d'acquisition d'image (12) montée sur le côté extérieur et/ou sur le côté intérieur de la carrosserie du véhicule, comprenant un dispositif de traitement du signal (13) et comprenant au moins un dispositif d'affichage (14) disposé dans le champ de vision du conducteur et/ou des occupants du véhicule, **caractérisé en ce que** l'au moins un dispositif d'affichage (14) du dispositif (10) de surveillance est réalisé sous la forme d'un écran plat (15) électronique déformable ou flexible monté sur le côté intérieur de la carrosserie.

2. Dispositif selon la revendication 1, **caractérisé en ce que** l'au moins un dispositif d'affichage (14) du dispositif (10) de surveillance est réalisé sous la forme d'un papier (écran) (16) électronique déformable ou flexible monté sur le côté intérieur de la carrosserie.

3. Dispositif selon la revendication 1 ou 2, **caractérisé en ce que** l'au moins un dispositif d'affichage (14) du dispositif (10) de surveillance est réalisé sous la forme d'un écran « E-ink » monté sur le côté intérieur de la carrosserie.

4. Dispositif selon la revendication 1 ou 2, **caractérisé en ce que** l'au moins un dispositif d'affichage (14) du dispositif (10) de surveillance est réalisé sous la forme d'un écran « Gyricon » monté sur le côté intérieur de la carrosserie.

5. Dispositif selon la revendication 1 ou 2, **caractérisé en ce que** l'au moins un dispositif d'affichage (14) du dispositif (10) de surveillance est réalisé sous la forme d'un écran plat électronique déformable ou flexible, d'épaisseur pratiquement équivalente à celle du papier, différent des écrans « E-ink » et « Gyricon », monté sur le côté intérieur de la carrosserie.

6. Dispositif selon l'une des revendications 1 à 5, **caractérisé en ce que** l'au moins un dispositif d'affichage (14) est monté sur le côté intérieur d'au moins une colonne A (17) de manière à agir conjointement avec une unité d'acquisition d'image (12) monté sur son côté extérieur et/ou côté intérieur correspondant.

7. Dispositif selon l'une des revendications 1 à 6, **caractérisé en ce que** l'au moins un dispositif d'affichage (14) est monté sur le côté intérieur d'au moins une colonne B (18) de manière à agir conjointement avec une unité d'acquisition d'image (12) monté sur son côté extérieur et/ou côté intérieur correspondant.

8. Dispositif selon l'une des revendications 1 à 7, **caractérisé en ce que** l'au moins un dispositif d'affichage (14) est monté sur le côté intérieur d'au moins une colonne C (19) de manière à agir conjointement avec une unité d'acquisition d'image (12) monté sur son côté extérieur et/ou côté intérieur correspondant.

9. Dispositif selon l'une des revendications 1 à 8, **caractérisé en ce que** l'au moins un dispositif d'affichage (14) est monté sur le côté intérieur de la carrosserie dans la zone frontale (20) de manière à agir conjointement avec au moins une unité d'acquisition d'image (12) monté sur le côté extérieur et/ou côté intérieur dans la zone frontale (20).

10. Dispositif selon l'une des revendications 1 à 9, **caractérisé en ce que** l'au moins un dispositif d'affichage (14) est monté sur le côté intérieur de la carrosserie dans la zone arrière (21) de manière à agir conjointement avec au moins une unité d'acquisition d'image (12) monté sur le côté extérieur et/ou côté intérieur dans la zone arrière (21).

11. Dispositif selon l'une des revendications 1 à 10, **caractérisé en ce que** l'au moins un dispositif d'affichage (14) est monté sur le côté intérieur de la carrosserie dans la zone du toit (22) de manière à agir conjointement avec au moins une unité d'acquisition d'image (12) monté sur le côté extérieur et/ou côté intérieur dans la zone du toit (22).

12. Dispositif selon l'une des revendications 1 à 10, **caractérisé en ce que** le dispositif de surveillance présente un capteur supplémentaire (28) pour déterminer la position de la tête et/ou la position des yeux du conducteur, cette information étant prévue pour être transmise au dispositif de traitement du signal (13).
